(19) Europäisches Patentamt
European Patent Office
Office européen des brevets

(11) Publication number: **0 327 235 B1**

(12) **EUROPEAN PATENT SPECIFICATION**

(45) Date of publication of patent specification: **09.03.94**

(51) Int. Cl.[5]: **C09J 183/04**, C09J 183/05

(21) Application number: **89300628.8**

(22) Date of filing: **24.01.89**

(54) **Crosslinkable pressure-sensitive adhesives containing a liquid copolymeric organopolysiloxane.**

(30) Priority: **25.01.88 US 148319**

(43) Date of publication of application:
**09.08.89 Bulletin 89/32**

(45) Publication of the grant of the patent:
**09.03.94 Bulletin 94/10**

(84) Designated Contracting States:
**BE DE FR GB NL SE**

(56) References cited:
**EP-A- 0 289 928**
**FR-A- 2 455 074**
**US-A- 3 644 245**
**US-A- 3 981 851**
**US-A- 4 322 518**
**US-A- 4 423 095**
**US-A- 4 554 331**

**WPIL, FILE SUPPLIER, no. 85-081019/13, Derwent Publications Ltd, London, GB; & US-A-6 569 536**

(73) Proprietor: **DOW CORNING CORPORATION**
**3901 S. Saginaw Road**
**Midland Michigan 48686-0995(US)**

(72) Inventor: **Swihart, Terence John**
**1544 St. Marys Court**
**Essexville Michigan(US)**
Inventor: **Blizzard, John Donald**
**1000 N Hampton**
**Bay City Michigan(US)**

(74) Representative: **Laredo, Jack Joseph et al**
**Elkington and Fife**
**Prospect House**
**8 Pembroke Road**
**Sevenoaks, Kent TN13 1XR (GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to crosslinkable pressure-sensitive adhesives and an improved method for forming a pressure-sensitive adhesive construction. More particularly, the present invention relates to a method of contacting two distinct components to form the pressure-sensitive adhesive construction, wherein a liquid copolymeric organopolysiloxane is incorporated in the first component and a cure agent for the liquid copolymeric organopolysiloxane is incorporated in the second component.

It is well known in the adhesives art that significant improvement in adhesion to various substrates can be obtained by incorporating various adhesion promoters into adhesive compositions for coating the substrate. Development of a wide-ranging adhesives art has benefited from this method of adhesion improvement and various organosilanes have been typically employed as the adhesion promoter.

Organosilanes which are useful in these applications generally contain hydrolyzable groups (e.g., halogen, alkoxy) attached to the silicon atom thereof which generate silanol groups upon contact with ambient moisture, and thus readily form chemical and/or physical bonds with mineral and metal surfaces. Also attached to the silicon of the organosilane adhesion promoter is an organic moiety which is reactive with, or at least shows some affinity towards, one of the components of the adhesive (usually the polymer). This latter requirement usually limits the practical utility of a specific organosilane to particular adhesive-substrate combinations. In this way, a chemical or physical "molecular bridge" is believed to be formed between the adhesive and the substrate which results in the observed macroscopic improvement in adhesion.

Thus, for example, United States Patent No. 3,644,245 to Flanagan et al. discloses hot melt adhesive compositions having improved adhesion under conditions of high humidity. These compositions comprise a synthetic polymer base and hydrolyzable silanes containing such organic groups as phenyl, vinyl, epoxy, mercapto, amino, ethyl, methyl and methacryloxypropyl.

Plueddemann, in United States Patent No. 3,981,851, teaches primer compositions containing a tackifier, such as hydrogenated rosin, an amino-functional trihydrolyzable silane, partial condensates and hydrochloride salts thereof. Adhesion of thermoplastic elastomers to a solid substrate is obtained using this composition as a prime coat for the substrate.

Additionally, the adhesion to a substrate, as well as the cohesive strength of an adhesive composition, may be augmented by at least partially cross-linking the adhesive. Various examples of this method exist in the art, which method is illustrated by United States Patent No. 3,657,379 to Hilbelink et al. This disclosure teaches adhesive systems comprising separated reactive components wherein (1) a first reactive polymer is mixed with a curing agent for a second reactive polymer to yield one component and (2) a second reactive polymer is mixed with a curing agent for the first reactive polymer to form another component. When the reactive materials from the two components are mixed, the curing agents react with their respective reactive polymers to give strong adhesive bonds.

A distinct category of adhesives which generally comprises natural or synthetic rubbers and resin tackifiers is known in the art as "pressure-sensitive adhesives" (PSAs). PSAs uniquely maintain a permanent "tack" which provides a bond of measurable strength immediately upon contact with another surface. Again, adhesion to a substrate, as well as the cohesive strength of the PSA composition itself, can be improved by curing the PSA.

A cured PSA based on a polyether having at least one silicon-containing hydrolyzable group in its molecule is disclosed by Hirose et al. in United States Patent No. 4,463,115. This composition also contains a tackifier and, optionally, a silanol condensation catalyst for accelerating the curing reaction. It is stated that the resulting PSA has good adhesive properties and can be prepared substantially without the use of a solvent.

In a subsequent United States Patent No. 4,665,127, Hirose et al. extended the above concept to include a wide variety of polymers having at least one reactive silicon-containing group combined with an organic aluminum or organic zirconium catalyst. These PSA compositions are said to have excellent heat resistance and releasability from substrates such as a silicone-coated release paper.

In United States Patent No. 3,707,518, Bemmels et al. disclose a self cross-linking pressure-sensitive acrylate adhesive and tape which comprises a copolymer that includes a small amount of an alkoxy silyl polymerizable crosslinking monomer. Also included in these compositions is 2 - 6 parts by weight of an acid monomer which acts as a built-in catalyst and causes the adhesive copolymer to cure at ordinary temperatures.

Aside from silicone-based PSAs and the somewhat related above mentioned examples wherein silanes are used as adhesion promoters or wherein reactive silicon groups are chemically attached to organic molecules to promote cure therebetween, silicones are generally known in the art to be abhesive materials

(i.e., they impart good release of adhesives). Indeed, they have been widely employed in release liners for pressure-sensitive tape. Thus, for example, in United States Patent No. 4,322,518, assigned to the assignee of the present invention, Blizzard discloses silicone coating compositions which comprise a curable silicone polymer fluid or gum and a liquid $SiO_2$-based resin as the sole curing agent for the fluid or gum. When cured on various substrates, these silicone compositions provide release coatings having controllable release forces for adhesives applied thereto.

It has, therefore, been of great surprise to now find that certain functional silicone compounds, when employed according to the methods of the present invention, can actually impart improved adhesion to a wide ranging array of pressure-sensitive adhesive constructions. Even more surprisingly, the augmented adhesion provided by the compositions of the present invention has been found to increase with time, contra the case wherein only silanes of the prior art, or cure agents alone, are incorporated in pressure-sensitive adhesive compositions. The present invention, therefore, relates to a method for forming a crosslinkable pressure-sensitive adhesive construction comprising: contacting a first component comprising (I) a pressure-sensitive adhesive; (II) a liquid copolymeric organopolysiloxane prepared by a method comprising (i) forming a homogeneous mixture having an acid number greater than zero and consisting essentially of (a) an organic solvent solution of a resinous copolymeric siloxane containing silicon-bonded hydroxyl radicals and consisting essentially of $R_3 3SiO_{1/2}$ units and $SiO_{4/2}$ units wherein the ratio of $R_3SiO_{1/2}$ units to $SiO_{4/2}$ units is 0.6:1 to 0.9:1 and each R denotes, independently, a monovalent hydrocarbon radical and (b) a liquid organohydrogenpoly-siloxane wherein each organic radical is, independently, a monovalent hydrocarbon radical, there being an average of at least one silicon-bonded hydrogen radical per molecule of said organohydrogenpolysiloxane, and (ii) heating said homogeneous mixture to remove substantially all of said organic solvent therefrom, with a second component comprising (III) said pressure-sensitive adhesive; and (IV) a cure agent for said liquid copolymeric organopolysiloxane.

This invention further relates to a composition comprising the pressure-sensitive adhesive and the liquid copolymeric organopolysiloxane employed in the above described method.

In the method of the present invention, a first component comprising a pressure-sensitive adhesive (PSA) (I) and a liquid copolymeric organopolysiloxane (II) is contacted with a second component comprising the same pressure-sensitive adhesive (III) and a cure agent for the liquid copolymeric organopolysiloxane (IV) to form a PSA construction. While not wishing to be bound by any particular mechanism, it is believed that, after the PSA construction is formed, the cure agent interacts with the liquid copolymeric organopolysiloxane to provide a "permanent set" to the adhesive system. Permanent set, as used herein, refers to the irreversible increase with time of the adhesive bond between the first and second components. This interaction can, of course, be hastened at elevated temperatures. The individual components, however, may generally be stored for prolonged periods under ambient conditions as long as they are not in contact with each other.

The pressure-sensitive adhesive (PSA) (I) employed in the method and composition of the present invention must have a reasonable degree of compatibility with the liquid copolymeric organopolysiloxane (II) and the cure agent (IV), each described infra. By "compatibility" is meant that the PSA components are not subject to phase separation upon standing and remain as homogeneous dispersions or solutions. These PSAs are generally based on a natural or synthetic rubber which has been mixed with a tackifier resin and, optionally, with various fillers, plasticizers, extender oils, catalysts, preservatives, antioxidants, stabilizers, or ingredient normally employed in the preparation of PSAs. The PSAs suitable for use in the methods and compositions of the present invention may be based on natural rubber and/or one or more synthetic rubber such as butyl, silicone, acrylic, styrene-butadiene, acrylonitrile-butadiene, polyisobutylene, isoprene, isoprene-isobutylene, chloroprene, polyvinylether, chlorinated and polyurethane rubbers, and the like. Typical resin tackifiers used in conjunction with these rubbers include rosin, hydrocarbon resins, terpene resin, siloxane resin and the like. Particularly preferred PSAs include those based on styrene-butadiene, silicone and acrylic polymers.

The pressure-sensitive adhesives (PSA) of ingredient (I) are well known in the art and further description thereof is considered unnecessary. Many of these materials are available commercially.

The liquid copolymeric organopolysiloxane (II) of this invention may be prepared by reacting (a) a resinous copolymeric siloxane with (b) a liquid organohydrogenpolysiloxane, as taught by Blizzard et al. in United States Patent No. 4,310,678, assigned to the assignee of the present invention. The liquid copolymeric organopolysiloxane contains silicon-bonded hydroxyl radicals and/or silicon-bonded hydrogen radicals which provide chemical reactivity therefor in the compositions of this invention.

Ingredient (a) that is used to prepare the liquid copolymeric organopolysiloxane is an organic solvent solution of a resinous copolymeric siloxane which consists essentially of $R_3SiO_{1/2}$ siloxane units and $SiO_{4/2}$ siloxane units in a molar ratio which provides from 0.6 to 0.9 $R_3SiO_{1/2}$ units for every $SiO_{4/2}$ unit. Each R

denotes a monovalent hydrocarbon radical; such as an alkyl radical, such as methyl, ethyl, isopropyl, butyl and hexyl; an alkenyl radical, such as vinyl and allyl; an aryl radical, such as phenyl, tolyl and xylyl; an arylalkyl radical, such as beta-phenylethyl and beta-phenylpropyl; and a cycloaliphatic radical, such as cyclopentyl and cyclohexyl. Preferably, all R radicals in ingredient (a) are lower alkyl radicals although a minor portion of them can be replaced with other monovalent hydrocarbon radicals such as the vinyl radical and/or the phenyl radical to provide additional properties for the resinous copolymer such as the reactivity attendant therewith. It is preferred that the resinous copolymeric siloxane portion of ingredient (a) consists essentially of $(CH_3)_3SiO_{1/2}$ siloxane units and $SiO_{4/2}$ siloxane units, in the molar ratio of about 0.75:1.

Resinous copolymeric siloxanes are well known in the art and are typically prepared in an organic solvent which can conveniently serve as the organic solvent portion of ingredient (a). The particular organic solvent portion of ingredient (a) is not critical and can be, for example, an aliphatic hydrocarbon, an aromatic hydrocarbon or halogenated derivatives of either, or mixtures thereof. Particularly useful organic solvents include benzene, toluene, xylene, trichloroethylene and mineral spirits.

Ingredient (b) that is used to prepare the liquid copolymeric organopolysiloxane is any liquid organohydrogenpolysiloxane containing an average of at least one silicon-bonded hydrogen radical per molecule and can have a linear, cyclic or branched structure or combinations thereof. Thus, ingredient (b) has the unit formula $R_mH_nSiO_{(4-m-n)/2}$ wherein m and n denote positive numbers whose sum is less than 4, preferably from 1.9 to 2.1. The organic radicals R in ingredient (b) can be any of the R radicals denoted above. Preferably, although not necessarily, the organic radicals R in ingredient (b) are the same as the organic radicals R in ingredient (a).

Examples of organohydrogenpolysiloxanes that are suitable for use as ingredient (b) include cyclic organohydrogenpolysiloxanes of the unit formula $R_mH_{2-m}SiO$ such as $[(CH_3)(H)SiO]_x$ wherein x is 3, 4, 5, 6 and higher and $[(CH_3)(H)SiO]_y[(CH_3)_2SiO]_z$ wherein the sum of y plus z is 3, 4, 5, 6 and higher, and linear organohydrogenpolysiloxanes of the formula $R'R_2SiO(R_2SiO)_a(RHSiO)_bSiR_2R'$, such as $R'(CH_3)_2SiO[(CH_3)_2SiO]_a[(CH_3(H)SiO]_bSi(CH_3)_2R'$ wherein R′ denotes H or methyl and a and b each denote zero or a number greater than zero, provided there is at least one silicon-bonded hydrogen radical per molecule, such as
$H(CH_3)_2SiO[(CH_3)_2SiO]_aSi(CH_3)_2H$,
$(CH_3)_3SiO[(CH_3)(H)SiO]_bSi(CH_3)_3$,
$(CH_3)_3SiO[(CH_3)(H)SiO]_b[(CH_3)_2SiO]_aSi(CH_3)_3$ and
$H(CH_3)_2SiO[(CH_3)_2SiO]_a[(CH_3)(H)SiO)]_bSi(CH_3)_2H$

An organohydrogenpolysiloxane having the formula $(CH_3)_3SiO[(CH_3)(H)SiO]_bSi(CH_3)_3$, wherein b has an average value of from 30 to 70, is a highly preferred ingredient (b). It is particularly preferred that b is about 35.

On a solids basis, the organohydrogenpolysiloxane (i.e., ingredient b) content of the liquid copolymeric organopolysiloxane varies between about 10 and 90 weight percent of the reaction product. Preferably, the organohydrogenpolysiloxane content of the liquid copolymeric organopolysiloxane varies between about 40 and 60 weight percent and most preferably it is about 50 weight percent on a solids basis. Herein, the term "solids basis" denotes the non-solvent content of any composition or ingredient.

In order to prepare the liquid copolymeric organopolysiloxane, a homogeneous mixture is formed by thoroughly mixing the desired amounts of ingredient (a) and ingredient (b) and, if necessary, an acid, preferably a strong acid such as hydrochloric acid, to provide an acid number greater than zero therefor. Preferably, the acid number of the homogeneous mixture, on a solids basis, has a value of from 0.1 to 1. Preferably, ingredient (a) is sufficiently acidic, as prepared, to provide this acidity for the homogeneous mixture. Herein, acid number is the number of mg of potassium hydroxide required to neutralize 1 gram of sample (solids basis) using Bromocresol Purple as the acid/base indicator.

The resulting homogeneous mixture is immediately or subsequently heated to volatilize the organic solvent therefrom. Said heating is preferably initially done at atmospheric pressure and is then continued at reduced pressure to accelerate the removal of said solvent.

In a preferred embodiment of this invention the homogeneous mixture of (a) plus (b) is heated to about 150 °C. at atmospheric pressure and is then subjected to a gradually decreasing pressure, without an increase in temperature, to remove substantially all of the organic solvent therefrom. By substantially, it is meant herein that the liquid copolymeric organopolysiloxane contains less than about 5 percent, preferably less than about 1 percent, by weight organic solvent.

Alternatively, the homogeneous mixture can be partially devolatilized at room temperature, such as by evaporation, and the partially devolatilized mixture then heated to remove substantially all of the organic solvent therefrom.

Further details dealing with the preparation of the liquid copolymeric organopolysiloxane, as well as descriptions of components (a) and (b), may be found in U.S. Patent No. 4,310,678.

Ingredient (III) of the present invention is the same PSA as ingredient (I).

The cure agent (IV) for the liquid copolymeric organopolysiloxane may be selected from any of the compounds which are known to facilitate the condensation reactions between SiOH groups and between SiOH and SiH groups. Compounds known to facilitate the reaction between SiH groups in the presence of trace quantities of water may also be used for this purpose. For example, the compounds contemplated may be metal salts of carboxylic acids. Metals such as Pb, Zn, Sb, Fe, Cd, Sn, Ba, Ca and Mn are known to be effective in this regard, particularly the naphthanates, octoates, hexoates, laurates and acetates. Preferred salts are dibutyltin diacetate, dibutyltin dilaurate and stannous octoate, particularly the dibutyltin diacetate. These catalysts, and their use in promoting the above-mentioned reactions, are well known in the art.

The cure agent may also be selected from active metal catalysts such as platinum and rhodium compounds. Platinum catalysts such as platinum acetylacetonate or chloroplatinic acid are representative of these compounds and suitable for use as the cure agent (IV). Again, such compounds, and their utility in promoting the above reactions, are well known in the art. A preferred cure agent of this type is a mixture of a chloroplatinic acid complex of divinyltetramethyldisiloxane diluted in dimethylvinylsiloxy endblocked polydimethylsiloxane which may be prepared according to methods described by Willing in U.S. Patent No. 3,419,593. Most preferably, this mixture contains about 0.65 weight percent platinum.

Cure agent (IV) can also comprise an amino-functional silane having the general formula

$$Q-\overset{\overset{\displaystyle R''''_{p}}{|}}{Si}-(\ X\ )_{3-p}$$

wherein Q is the group

$$H_2N-\left[R''\ -\overset{H}{N}-\right]_n-R'''-\ .$$

In the above formulas, R'' represents a divalent hydrocarbon radical having 2 to 4 carbon atoms such as ethylene, trimethylene and tetramethylene. R''' is a divalent hydrocarbon radical having 3 to 6 carbon atoms, including such groups as trimethylene, tetramethylene, methyltrimethylene, pentamethylene and hexamethylene. The organic group R'''' may be selected from the group consisting of the methyl, ethyl, propyl, butyl and phenyl radicals. The hydrolyzable species X may be selected from methoxy, ethoxy, acetoxy or chlorine groups. Finally, n is an integer between zero and two, inclusive, and p is zero or one. Preferred aminofunctional silanes are N-gamma-aminopropyltriethoxysilane, N-beta-aminoethyl-gamma-aminoisobutyltrimethoxysilane and N-beta-aminoethyl-gamma-aminopropyltrimethoxysilane, the latter being most preferred. These amino-functional silanes may be combined with up to about 90 weight percent of organosilanes having the general formula $RSiX_3$ wherein R and X have the above defined meanings. Preferred R groups are selected from methyl, ethyl or phenyl radicals and preferred X groups are methoxy groups. Thus, an example of such a combination is a mixture consisting of 10% by weight of N-beta-aminoethyl-gamma-aminopropyltrimethoxysilane and 90% by weight of phenyltrimethoxysilane. When these cure agents bearing the hydrolyzable group X are employed in the second component of the present invention, this component must be stored in a dry environment until it is used. In use, the X group is hydrolyzed by ambient moisture.

Amine-functional silicones may also be employed as the cure agent and have the average general formula

$$R_3SiO(R_2SiO)_x(\underset{Q}{RSiO})_ySiR_3$$

wherein R and Q have their previously defined meanings, x is about 50 to 450 and y is 1 to about 50. It is preferred that all the R groups be methyl. An example of such a preferred amine-functional silicone is represented by the formula

$$Me_3Si(Me_2SiO)_{96}(\underset{\substack{|\\ CH_2CH(Me)CH_2NHCH_2CH_2NH_2}}{MeSiO})_2SiMe_3$$

wherein Me denotes the methyl radical.

Cure agent (IV) may also be selected from primary, secondary or tertiary organic amines. Preferred amines are the alkyl or aryl amines wherein the alkyl groups contain from 1 to 6 carbon atoms and wherein the aryl group is the phenyl radical. Specific examples of amines useful in the present invention are ethylamine, methylamine, phenylamine, diethylamine, dimethylamine, dibutylamine, diphenylethylamine, phenylmethylamine, butylamine, triethylamine, trimethylamine and tripropylamine. For the purposes of the present invention, diethylamine and triethylamine are most preferred.

The amine-functional silanes and siloxanes, as well as the organic amines, are all well known in the art and further descriptions thereof are considered unnecessary.

The compositions of this invention can further comprise typical adjuvants employed in the preparation of pressure sensitive adhesives, such as catalysts, fillers, pigments, dyes, fungicides, bacteriocides, stabilizers, antioxidants and cure-control additives, if desired.

In order to practice the present invention, the first component of this invention is prepared by thoroughly mixing, on a solids basis, from about 1 to 50 parts by weight, preferably from 3 to 10 parts, of the liquid copolymeric organopolysiloxane (II) with 100 parts of the PSA. The compositions of the present invention, in which the liquid copolymeric organopolysiloxane (II) is incorporated in a PSA (I), are thus employed as an intermediate in the method of the invention. In a similar manner, the second component of this invention is prepared by thoroughly mixing a curing amount of the cure agent (IV) with 100 parts of the PSA (III). By "curing amount", it is meant at least an amount sufficient to improve the adhesion between the two components as demonstrated by an increase in bond strength and/or increased cohesive failure versus the unmodified PSA. Thus, the amount of cure agent employed will vary according to the nature of the PSA, amount of the liquid copolymeric organopolysiloxane incorporated therein and the particular cure agent selected. Those skilled in the art will readily arrive at optimum formulations by routine experimentation. For example, when the PSA is selected from the preferred systems based on styrene-butadiene, acrylic or silicone rubber, from about 0.01 to 50 parts by weight of the preferred cure agent dibutyltin diacetate are effectively employed per 100 parts by weight of the PSA, from about 3 to 10 parts of dibutyltin diacetate being particularly preferred. Likewise, when the cure agent is the preferred chloroplatinic acid complex of divinyltetramethyldisiloxane diluted in dimethylvinylsiloxy endblocked polydimethylsiloxane recited supra, it is advantageously employed so as to provide from about 5 to 500 ppm (parts per million) of platinum metal to the second component, from 20 to 100 ppm being most preferred in such compositions.

As mentioned above, however, the maximum liquid copolymeric organopolysiloxane content in the first component is limited by compatibility considerations and this ingredient must not separate from the PSA matrix to form its own macroscopic phase. It is, of course, recognized that separate phases may exist at a microscopic level.

As will be readily recognized by those skilled in the art, the PSAs of the present invention may be supplied as a solution or dispersion in an inert organic solvent or as a water-borne dispersion. By inert, it is meant that the solvent does not react with any of the other ingredients of the present invention. The particular solvent selected will generally depend upon the PSA employed. Thus, for a non-polar PSA such as a silicone or a butyl rubber, a non-polar solvent such as toluene, hexane, cyclohexane, mineral spirits or xylene would be appropriate. For a polar PSA such as a urethane or acrylonitrile, a polar solvent such as acetone, ethyl acetate, tetrahydrofuran or dimethylformamide might be used. When the PSA is supplied as a water-based emulsion, various surfactants are included to maintain a homogeneous dispersion of the liquid and solid ingredients thereof. In general, the PSAs contemplated in the present invention are prepared and marketed in such solvent or water dispersion form and are well known in the art.

Likewise, the liquid copolymeric organopolysiloxane (II) and the cure agent (IV) may be supplied in an organic solvent or as a water-based emulsion for combination with similarly dissolved or dispersed PSA. Again, when water-based emulsions of these ingredients are employed, surfactants are added to maintain a homogeneous dispersion. Examples of such water-based emulsions of the liquid copolymeric organopolysiloxane (II) and the cure agent (IV) are provided in United States Patent No. 4,423,095, assigned to the assignee of the present invention.

Any conventional mixing method may be used to mix the ingredients of the above described components. For example, when the PSA is supplied in solution or emulsion form, relatively low shear mixers such as low speed blade mixers or Pfaudlers may be used. When an all solids PSA is to be used according to the methods of the present invention, a high intensity mixer, such as a Banbury or roll mill, may be required to insure good dispersion of the ingredients. As far as is known, the order of mixing is not critical to the operability of this invention as long as the liquid copolymeric organopolysiloxane and the cure agent therefor are thoroughly dispersed in the respective PSA composition.

After the above described first and second components are prepared, said components are contacted in the method of this invention to form a pressure-sensitive adhesive construction. Ordinarily, each component is coated onto a substrate before the contacting step is executed. Thus, this well known method in the art can be practiced using the components disclosed herein by first coating a backer, such as a plastic or metallic film or tape, with the first component of this invention and contacting the resulting composite with the surface of a solid substrate, such as a metal or plastic, which was previously coated with the second component of the present invention. It is also contemplated that a free film of the first and second components of the present invention may be prepared by coating each component onto a release liner as is commonly practiced in the art in certain bonding operations.

To form such coatings on substrates, solvent-based compositions of this invention can be diluted with a sufficient quantity of a good solvent for the respective components in order to provide a desired coating consistency. As described above, such solvents as hexane, heptane, toluene, xylene, mineral spirits or ketones are suitable for this purpose, the exact choice being based on the nature of the PSAs involved, as is commonly practiced in the art. In the case of water-borne systems, water could be used to adjust the consistency. Coatings of such solvent-based or water-based first and second components may be applied to substrates by any of the methods commonly practiced in the coating arts. For example, they may be dipped, brushed, flow coated, blade coated or gravure coated onto a substrate. After coating the backer or solid substrate with the PSA composition, solvent (or water) is generally removed by evaporation at ambient temperature or by heating, as commonly practiced in the art. Alternatively, 100% solids coatings are also contemplated herein. These may be applied to a substrate by, e.g., a calendaring operation or one of the above mentioned techniques if the viscosity is low enough.

Particularly preferred embodiments of the present invention result when ingredient (II) is a liquid copolymeric organopolysiloxane in which the resinous copolymeric siloxane portion of ingredient (a) consists essentially of $(CH_3)_3SiO_{1/2}$ siloxane units and $SiO_{4/2}$ siloxane units, in the molar ratio of about 0.75:1 and ingredient (b) is $(CH_3)_3SiO[(CH_3)(H)SiO]_bSi(CH_3)_3$ in which b is about 35, the ratio of (a) to (b) being about 1:1 on a solids weight basis.

Those skilled in the art will readily recognize that the constructions of the present invention may be used in many of the applications currently being served by the PSAs described above (i.e., ingredient I of the present invention). With the constructions of the present invention, however, the adhesion is improved and, with the passage of time, the adhesive bond formed between the first and second components will generally increase in strength. This permanent set aspect of the present invention is, of course, an advantage in many applications wherein a strong bond, rather than reversibility thereof, is of primary importance. Such applications include bonding of automotive and decorative trim, permanent fastening devices such as picture hooks, contact paper and labels, electronic component assembly, substrate lamination (e.g., metals, paper, plastic, floor tiles, carpeting) and the like.

The following examples are presented to further illustrate the compositions and methods of this invention, but are not to be construed as limiting the invention, which is delineated in the appended claims. All parts and percentages in the examples are on a weight basis and all are reported on a solids basis unless indicated to the contrary.

The following ingredients were used to prepare the compositions of this invention.

FLUID A - A 70% xylene solution of a siloxane resin copolymer consisting essentially of $(CH_3)_3SiO_{1/2}$ units and $SiO_2$ units in a molar ratio of approximately 0.75:1.

FLUID B - A liquid organohydrogenpolysiloxane having the average formula

$$Me_3SiO(\underset{H}{MeSiO})_{35}SiMe_3$$

wherein Me denotes the methyl radical.

FLUID C - A liquid organopolysiloxane copolymer was prepared according to the methods of United States Patent No. 4,310,678 wherein 59 parts of FLUID A was thoroughly mixed with 41 parts of FLUID B using a nitrogen purge. Xylene solvent was removed as this mixture was heated under a vacuum of about 100 mm Hg at 150 °C. for 2 hours to yield a reaction product containing a 1:1 weight ratio of the siloxane resin copolymer to the organohydrogenpolysiloxane.

DBTDA - Dibutyltin diacetate.

Examples 1 - 2

An acrylic pressure-sensitive adhesive (PSA) solution, GELVA MS 263, was modified to form a construction of the present invention. GELVA MS 263 (Monsanto Co., St. Louis, MO) is described as a 45% solids solution of an acrylic copolymer in ethyl acetate and hexane. In Example 2, a first component was prepared by thoroughly mixing 9 parts of FLUID C with 100 parts (solids basis) of the PSA. A second component was prepared by thoroughly mixing 5 parts of the DBTDA (tin cure agent) with 100 parts of the PSA (solids basis). Each of these components was then applied to 5 mil aluminum foil, dried to form a 2 mil-thick film thereon and the coated foil was cut into 1 inch-wide strips. The foil strips bearing the first and second PSA adhesive films were pressed together at room temperature to form a lap joint having a 1 inch overlap (i.e., a total of 1 square inch contact surface). The same procedure was followed in the preparation of (Comparative) Example 1, which served as a control and contained no additives in either PSA layer. The lap joints were aged at room temperature for various periods and then tested (at room temperature using a pull rate of 1/2 inch/minute) to determine shear adhesive strength. Results are presented in Table 1.

Table 1

| Adhesion of GELVA MS 263 Acrylic PSA (Shear; on 5 mil Aluminum Foil) | | |
|---|---|---|
| Aging Time at 23 °C (hr) | (Comparative) Example 1 | Example 2 |
| 0.02 | 67 | 63 |
| 0.08 | 78 | 67 |
| 0.17 | 72 | 71 |
| 1.0 | 62 | 78 |
| 24 | 67 | 87* |
| 48 | 51 | 86* |

* indicates that aluminum foil broke -- actual strength greater than reported.

Examples 3 - 4

A styrene-butadiene rubber PSA solution, DURO-TAK 36-6045 (National Starch and Chemical Co., Bridgewater, NJ), was modified and tested as in Examples 1 - 2. DURO-TAK 36-6045 is described as a 48% solids solution in toluene, heptane and isopropyl alcohol. In Example 4, a first component, containing 9 parts of FLUID C per 100 parts of the PSA, and a second component, containing 5 parts of DBTDA per 100 parts of the PSA, were again coated onto 5 mil aluminum foil, as above. A control SBR PSA construction, (Comparative) Example 3, was prepared in a similar manner, but neither of the components were modified in this case. These constructions were tested for shear adhesive strength as in Examples 1 - 2. The results, after aging for the indicated times at room temperature, are given in Table 2.

Table 2

| Adhesion of DURO-TAK 36-6045 Styrene-Butadiene Rubber PSA (Shear; on 5 mil Aluminum Foil) | | |
|---|---|---|
| Aging Time at 23 °C (hr) | (Comparative) Example 3 | Example 4 |
| 0.02 | 72 | 17 |
| 0.08 | 74 | 48 |
| 0.17 | 59 | 81 |
| 1.0 | 62 | 83 |
| 24 | 61 | 84* |
| 48 | 67 | 79* |

* indicates that aluminum foil broke -- actual strength greater than reported.

Examples 1 - 4 illustrate the improved adhesion, particularly with increasing aging time, of the constructions of the present invention.

Examples 5 - 6

To illustrate the increase of adhesive strength of the PSA systems of the present invention in a solvent-based silicone PSA, the procedures of Examples 1 - 2 were followed. The silicone PSA was prepared according to Example 3B of United States Patent No. 4,584,355, cited supra. In these examples, shear adhesion was measured at room temperature after 2 mil thick MYLAR film as well as aluminum panel strips coated with the PSA were pressed together and aged for the times indicated in Table 3. Here, (Comparative) Example 5 served as the control wherein neither layer contained additives.

Table 3

Adhesion of Silicone PSA to Itself (180 degree shear)

| | (Comparative) Ex. 5 | Ex. 6 |
|---|---|---|
| Parts of FLUID C in 100 parts of first PSA layer | -- | 10 |
| Parts DBTDA in 100 parts of second PSA layer | -- | 3 |
| Adhesion (on MYLAR film) after aging: | | |
| (lb/in) 24 hours | 36 | 42 |
| 48 hours | 37 | 45 |
| Adhesion (on aluminum panel) after aging: | | |
| (lb/in) 24 hours | 39 | 51 |
| 48 hours | 49 | 69 |

Again, the construction of the present invention showed improved adhesion over the unmodified silicone PSA (Comparative Example 5).

## Claims

**1.** A composition for use as an intermediate in the formation of a crosslinkable pressure-sensitive adhesive composition, said composition comprising:

(I) 100 parts by weight of a pressure-sensitive adhesive comprising a natural and/or synthetic rubber together with a resin tackifier; and

(II) from 0.1 to 50 parts by weight of a liquid copolymeric organopolysiloxane prepared by a method comprising (i) forming a homogeneous mixture having an acid number greater than zero and consisting essentially of (a) an organic solvent solution of a resinous copolymeric siloxane containing silicon-bonded hydroxyl radicals and consisting essentially of $R_3SiO_{1/2}$ units and $SiO_{4/2}$ units wherein

the ration of $R_3SiO_{1/2}$ units to $SiO_{4/2}$ units is 0.6:1 to 0.9:1 and each R denotes, independently, a monovalent hydrocarbon radical and (b) a liquid organohydrogenpolysiloxane wherein each organic radical is, independently, a monovalent hydrocarbon radical, there being an average of at least one silicon-bonded hydrogen radical per molecule of said organohydrogenpolysiloxane, and (ii) heating said homogeneous mixture to remove substantially all of said organic solvent therefrom, said pressure-sensitive adhesive (I) being compatible with said liquid copolymeric organopolysiloxane (II).

**2.** A composition according to Claim 1, wherein said synthetic rubbers are selected from butyl, silicone, acrylic, styrene-butadiene, acrylonitrile-butadiene, polyisobutylene, isoprene, isoprene-isobutylene, chloroprene, polyvinylether, chlorinated and polyurethane rubbers and said resin tackifier is selected from rosin, hydrocarbon resins, terpene resin and siloxane resin.

**3.** A composition according to Claim 2, in which the synthetic rubber component of said pressure-sensitive adhesive (I) is selected from styrene-butadiene, silicone and acrylic polymers.

**4.** A composition according to Claim 1, wherein said ingredient (b) of said component (II) is an organohydrogenpolysiloxane having the formula

$(CH_3)_3SiO[(CH_3)(H)SiO]_bSi(CH_3)_3$ ,

wherein (b) has an average value of from 30 to 70.

**5.** A composition according to Claim 4, wherein the value of the symbol (b) in the formula of the organopolysiloxane constituting ingredient (b) is about 35.

**6.** A method of forming a crosslinkable pressure-sensitive adhesive composition comprising contacting a first component comprising (I) 100 parts of a pressure-sensitive adhesive comprising a natural and/or synthetic rubber together with a resin tackifier, and (II) from 0.1 to 50 parts by weight of a liquid copolymeric organopolysiloxane prepared by a method comprising (i) forming a homogeneous mixture having an acid number greater than zero and consisting essentially of (a) an organic solvent solution of a resinous copolymeric siloxane containing silicon-bonded hydroxyl radicals and consisting essentially of $R_3SiO_{1/2}$ units and $SiO_{4/2}$ units wherein the ration of $R_3SiO_{1/2}$ units to $SiO_{4/2}$ units is 0.6:1 to 0.9:1 and each R denotes, independently, a monovalent hydrocarbon radical and (b) a liquid organohydrogenpolysiloxane wherein each organic radical is, independently, a monovalent hydrocarbon radical, there being an average of at least one silicon-bonded hydrogen radical per molecule of said organohydrogenpolysiloxane, and (ii) heating said homogeneous mixture to remove substantially all of said organic solvent therefrom, said pressure-sensitive adhesive (I) being compatible with said liquid copolymeric organopolysiloxane (II), with a second component comprising (III) said pressure-sensitive adhesive (I) and (IV) a cure agent for said liquid copolymeric organopolysiloxane (II).

**7.** A method according to 6, wherein said pressure-sensitive adhesive is selected from those based on natural, butyl, silicone, acrylic, styrene-butadiene, acrylonitrile-butadiene, polyisobutylene, isoprene, isoprene-isobutylene, chloroprene, polyvinylether, chlorinated or polyurethane rubbers.

**8.** The method of Claim 1, wherein said cure agent comprises an amine-functional silane having the general formula:

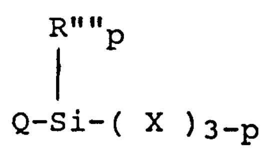

wherein Q is the group

$$H_2N-\left[R''-\underset{}{\overset{H}{\overset{|}{N}}}\right]_n-R'''-$$

in which R" represents a divalent hydrocarbon radical having 2 to 4 carbon atoms, R"' is a divalent hydrocarbon radical having 3 to 6 carbon atoms, R"" is selected from methyl, ethyl, propyl, butyl or phenyl radicals, X is selected from methoxy, ethoxy, acetoxy or chlorine groups, n is an integer between zero and two, inclusive, and p is zero or one.

**9.** The method of Claim 8, wherein said amine-functional silane comprises at least one silane selected from N-gamma-aminopropyltriethoxysilane and N-beta-aminoethyl-gamma-aminopropyltrimethoxysilane.

**Patentansprüche**

**1.** Stoffmischng zur Verwendung als Zwischenprodukt zur Herstellung einer vernetzbaren druckempfindlichen Klebemischung, enthaltend:
(I) 100 Gewichtsteile eines druckempfindlichen Klebemittels, enthaltend natürlichen und/oder synthetischen Kautschuk zusammen mit einem klebrig machenden Harz;
(11) von 0,1 bis 50 Gewichtsteile eines flüssigen copolymeren Organopolysiloxans, nach einem Verfahren hergestellt, bei dem man (i) eine homogene Mischung mit einer Säurezahl größer als 1 herstellt, die im wesentlichen besteht aus (a) einer Lösung, in einem organischen Lösungsmittel, eines copolymeren Siloxanharzes, das an Silizium gebundene Hydroxylgruppen enthält und im wesentlichen aus Einheiten der Formeln $R_3SiO_{1/2}$ und $SiO_{4/2}$ besteht, wobei das Verhältnis der Einheiten $R_3SiO_{1/2}$ zu den Einheiten $SiO_{4/2}$ 0,6:1 bis 0,9:1 beträgt und R jeweils und unabhängig einen einwertigen Kohlenwasserstoffrest bezeichnet, und (b) einem flüssigen Organohydrogenpolysiloxan, in dem jeder organische Rest unabhängig ein einwertiger Kohlenwasserstoffrest ist, wobei durchschnittlich mindestens ein an Silizium gebundenes Wasserstoffatom in jedem Molekül des Organohydrogenpolysiloxans vorhanden ist, und (ii) die homogene Mischung erhitzt, um im wesentlichen das gesamte organische Lösungsmittel zu entfernen, wobei das druckempfindliche Klebemittel (I) mit dem flüssigen copolymeren Organopolysiloxan (II) verträglich ist.

**2.** Stoffmischung nach Anspruch 1, wobei die synthetischen Kautschuke ausgewählt sind aus Butylkautschuk, Silkonkautschuk, Acrylkautschuk, Styrol-Butadien-Kautschuk, Acrylnitril-Butadien-Kautschuk, Polyisobutylenkautschuk, Isoprenkautschuk, Isopren-Isobutylen-Kautschuk, Chloroprenkautschuk, Polyvinyletherkautschuk, chloriertem Kautschuk und Polyurethankautschuk, und das klebrig machende Harz ausgewählt ist aus Kolophonium, Kohlenwasserstoffharzen, Terpenharzen und Siloxanharzen.

**3.** Stoffmischung nach Anspruch 2, wobei der Anteil des synthetischen Kautschuks des druckempfindlichen Klebemittels (I) ausgewählt ist aus Styrol-Butadien-, Silikon- und Acrylpolymeren.

**4.** Stoffmischung nach Anspruch 1, wobei der Bestandteil (b) der Komponente (II) ein Organohydrogenpolysiloxan der Formel

$$(CH_3)SiO[(CH_3)(H)SiO]_bSi(CH_3)_3$$

ist, in der b einen durchschnittlichen Wert von 30 bis 70 besitzt.

**5.** Stoffmischung nach Anspruch 4, wobei der Wert von b in der Formel des Organopolysiloxans, das den Bestandteil (b) darstellt, etwa 35 beträgt.

**6.** Verfahren zur Herstellung einer vernetzbaren druckempfindlichen Klebemischung, bei dem man miteinander in Berührung bringt
eine erste Komponente, enthaltend

(I) 100 Gewichtsteile eines druckempfindlichen Klebemittels, enthaltend natürlichen und/oder synthetischen Kautschuk zusammen mit einem klebrig machenden Harz;

(II) von 0,1 bis 50 Gewichtsteile eines flüssigen copolymeren Organopolysiloxans, nach einem Verfahren hergestellt, bei dem man (i) eine homogene Mischung mit einer Säurezahl größer als 1 herstellt, die im wesentlichen besteht aus (a) einer Lösung, in einem organischen Lösungsmittel, eines copolymeren Siloxanharzes, das an Silizium gebundene Hydroxylgruppen enthält und im wesentlichen aus Einheiten der Formeln $R_3SiO_{1/2}$ und $SiO_{4/2}$ besteht, wobei das Verhältnis der Einheiten $R_3SiO_{1/2}$ zu den Einheiten $SiO_{4/2}$ 0,6:1 bis 0,9:1 beträgt und R jeweils und unabhängig einen einwertigen Kohlenwasserstoffrest bezeichnet, und (b) einem flüssigen Organohydrogenpolysiloxan, in dem jeder organische Rest unabhängig ein einwertiger Kohlenwasserstoffrest ist, wobei durchschnittlich mindestens ein an Silizium gebundenes Wasserstoffatom in jedem Molekül des Organohydrogenpolysiloxans vorhanden ist, und (ii) die homogene Mischung erhitzt, um im wesentlichen das gesamte organische Lösungsmittel zu entfernen, wobei das druckempfindliche Klebemittel (I) mit dem flüssigen copolymeren Organopolysiloxan (II) verträglich ist,

mit einer zweiten Komponente, enthaltend

(III) das druckempfindliche Klebemittel (I) sowie

(IV) einen Härter für das flüssige copolymere Organopolysiloxan (II).

7. Verfahren nach Anspruch 6, wobei das druckempfindliche Klebemittel ausgewählt ist aus natürlichem Kautschuk, Butylkautschuk, Silkonkautschuk, Acrylkautschuk, Styrol-Butadien-Kautschuk, Acrylnitril-Butadien-Kautschuk, Polyisobutylenkautschuk, Isoprenkautschuk, Isopren-Isobutylen-Kautschuk, Chloroprenkautschuk, Polyvinyletherkautschuk, chloriertem Kautschuk und Polyurethankautschuk.

8. Verfahren nach Anspruch 6, wobei der Härter ein Aminofunktionales Silan der allgemeinen Formel

$$\begin{array}{l} \quad\;\; R''''_{p} \\ \quad\;\; | \\ Q\text{-}Si\text{-}(X)_{3-p} \end{array}$$

enthält, in der Q den Rest

$$H_2N-\left[R''-\overset{H}{N}\right]_n-R'''-$$

bezeichnet, wobei in den Formeln R" für einen zweiwertigen Kohlenwasserstoffrest mit 2 bis 4 Kohlenstoffatomen steht, R"' einen zweiwertigen Kohlenwasserstoffrest mit 3 bis 6 Kohlenstoffatomen bedeutet, R"" ausgewählt ist aus den Resten Methyl, Ethyl, Propyl, Butyl oder Phenyl, X für Methoxy, Ethoxy, Acetoxy oder Chlor steht, n eine ganze Zahl zwischen 0 und einschließlich 2 bedeutet und p für 0 oder 1 steht.

9. Verfahren nach Anspruch 8, wobei das Amino-funktionale Silan mindestens ein aus N-gamma-aminopropyltriethoxysilan und N-beta-aminoethyl-gamma-aminopropyltrimethoxysilan ausgewähltes Silan enthält.

## Revendications

1. Une composition à utiliser comme produit intermédiaire dans la formation d'une composition d'adhésif réticulable sensible à la pression, ladite composition comprenant :

(I) 100 parties en poids d'un adhésif sensible à la pression comprenant un caoutchouc naturel et/ou synthétique, ainsi qu'un agent d'adhésivité résineux ; et

(II) 0,1 à 50 parties en poids d'un organopolysiloxane copolymère liquide préparé par un procédé consistant à (i) former un mélange homogène ayant un indice d'acide supérieur à zéro et constitué

essentiellement de (a) une solution dans un solvant organique d'un siloxane copolymère résineux contenant des radicaux hydroxyle liés au silicium et constitué essentiellement de motifs $R_3SiO_{1/2}$ et de motifs $SiO_{4/2}$ où le rapport des motifs $R_3SiO_{1/2}$ aux motifs $SiO_{4/2}$ est de 0,6:1 à 0,9:1 et chaque R représente, indépendamment, un radical hydrocarboné monovalent, et (b) un organohydrogénopolysiloxane liquide dans lequel chaque radical organique est, indépendamment, un radical hydrocarboné monovalent, au moins un radical d'hydrogène lié au silicium étant présent en moyenne par molécule dudit organohydrogénopolysiloxane, et (ii) chauffer ledit mélange homogène pour en éliminer sensiblement la totalité dudit solvant organique,

ledit adhésif sensible à la pression (I) étant compatible avec ledit organopolysiloxane copolymère liquide (II).

**2.** Une composition selon la revendication 1, dans laquelle lesdits caoutchoucs synthétiques sont choisis parmi les caoutchoucs butyl, silicones, acryliques, styrène-butadiène, acrylonitrile-butadiène, polyisobutylène, d'isoprène, isoprène-isobutylène, de chloroprène, poly(éther de vinyle), chlorés et polyuréthannes, et ledit agent d'adhésivité résineux est choisi parmi la colophane, les résines hydrocarbonées, les résines terpéniques et les résines de siloxanes.

**3.** Une composition selon la revendication 2, dans laquelle le composant caoutchouc synthétique dudit adhésif sensible à la pression (I) est choisi parmi les polymères styrène-butadiène, silicones et acryliques.

**4.** Une composition selon la revendication 1, dans laquelle ledit ingrédient (b) dudit composant (II) est un organohydrogénopolysiloxane répondant à la formule

$(CH_3)_3SiO[(CH_3)(H)SiO]_bSi(CH_3)_3$

où la valeur moyenne de b est de 30 à 70.

**5.** Une composition selon la revendication 4, dans laquelle la valeur du symbole b dans la formule de l'organopolysiloxane constituant l'ingrédient (b) est d'environ 35.

**6.** Un procédé de formation d'une composition d'adhésif réticulable sensible à la pression, comprenant la mise en contact d'un premier composant comprenant (I) 100 parties en poids d'un adhésif sensible à la pression comprenant un caoutchouc naturel et/ou synthétique, ainsi qu'un agent d'adhésivité résineux, et (II) 0,1 à 50 parties en poids d'un organopolysiloxane copolymère liquide préparé par un procédé consistant à (i) former un mélange homogène ayant un indice d'acide supérieur à zéro et constitué essentiellement de (a) une solution dans un solvant organique d'un siloxane copolymère résineux contenant des radicaux hydroxyle liés au silicium et constitué essentiellement de motifs $R_3SiO_{1/2}$ et de motifs $SiO_{4/2}$ où le rapport des motifs $R_3SiO_{1/2}$ aux motifs $SiO_{4/2}$ est de 0,6:1 à 0,9:1 et chaque R représente, indépendamment, un radical hydrocarboné monovalent, et (b) un organohydrogénopolysiloxane liquide dans lequel chaque radical organique est, indépendamment, un radical hydrocarboné monovalent, au moins un radical d'hydrogène lié au silicium étant présent en moyenne par molécule dudit organohydrogénopolysiloxane, et (ii) chauffer ledit mélange homogène pour en éliminer sensiblement la totalité dudit solvant organique, ledit adhésif sensible à la pression (I) étant compatible avec ledit organopolysiloxane copolymère liquide (II), avec un second composant comprenant (III) ledit adhésif sensible à la pression (I) et (IV) un agent durcisseur pour ledit organopolysiloxane copolymère liquide (II).

**7.** Un procédé selon la revendication 6, dans lequel ledit adhésif sensible à la pression est choisi parmi ceux qui sont à base de caoutchoucs naturel, butyl, silicones, acryliques, styrène-butadiène, acrylonitrile-butadiène, polyisobutylène, d'isoprène, isoprène-isobutylène, de chloroprène, poly(éther de vinyle), chlorés ou polyuréthannes.

**8.** Le procédé de la revendication 6, dans lequel ledit agent durcisseur comprend un silane à fonctionnalité amine répondant à la formule générale :

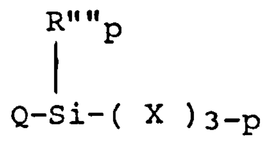

où Q est le groupe

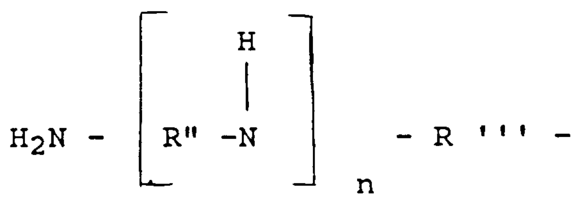

où R'' représente un radical hydrocarboné divalent ayant 2 à 4 atomes de carbone, R''' est un radical hydrocarboné divalent ayant 3 à 6 atomes de carbone, R'''' est choisi parmi les radicaux méthyle, éthyle, propyle, butyle et phényle, X est choisi parmi les radicaux méthoxy, éthoxy, acétoxy et chloro, n est un nombre entier compris entre zéro et deux inclusivement, et p est zéro ou un.

**9.** Le procédé de la revendication 8, dans lequel ledit silane à fonctionnalité amine comprend au moins un silane choisi parmi le N-gamma-aminopropyltriéthoxysilane et le N-bêta-aminoéthyl-gamma-aminopropyltriméthoxysilane.